(19) Europäisches Patentamt
European Patent Office
Office européen des brevets

(11) Publication number : **0 680 061 A1**

# (12) EUROPEAN PATENT APPLICATION

(21) Application number : **95301527.8**

(51) Int. Cl.[6] : **H01G 9/155**

(22) Date of filing : **08.03.95**

(30) Priority : **09.03.94 JP 65746/94**

(43) Date of publication of application :
**02.11.95 Bulletin 95/44**

(84) Designated Contracting States :
**DE FR GB IT**

(71) Applicant : **TDK Corporation**
**13-1, Nihonbashi 1-chome**
**Chuo-ku, Tokyo-to 103 (JP)**

(72) Inventor : **Miyairi, Masumi, c/o TDK Corporation**
**13-1, Nihonbashi 1-chome**
**Chuo-ku, Tokyo (JP)**

(74) Representative : **Wise, Stephen James et al**
**c/o RAWORTH, MOSS & COOK**
**36 Sydenham Road**
**Croydon, Surrey CR0 2EF (GB)**

## (54) Electric double-layer capacitor.

(57) An electric double-layer capacitor includes an electrolyte, a solvent, and polarizable electrodes having activated carbon and a current collector. The activated carbon is obtained by curing and carbonizing a furan resin prepared from furfuryl alcohol and/or furfural monomer and activating the carbonized material such that the peak intensity A corresponding to carbon (002) plane of the activated carbon divided by the peak intensity B corresponding to carbon (002) plane of the carbonized material both in X-ray diffraction spectrum, A/B, is 0.5 or less. The capacitor has a capacitance C per single-electrode weight of at least 200 F/g and a C*/S value of at least 0.07 F/m$^2$ wherein C* is a capacitance (F/g) per single-electrode weight as measured using water as the solvent and S is a BET specific surface area (m$^2$/g) of the activated carbon.

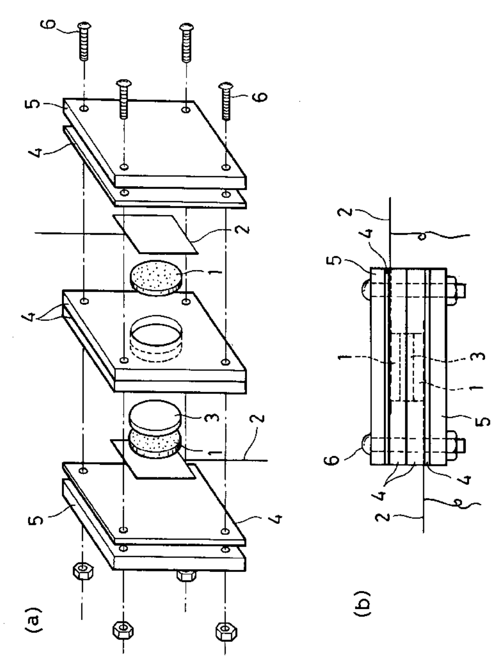


FIG. 1



Jouve, 18, rue Saint-Denis, 75001 PARIS

## BACKGROUND OF THE INVENTION

### Technical Field

This invention relates to an electric double-layer capacitor having high capacitance.

### Background Art

Electric double-layer capacitors, because of their high capacity, are used as memory backup devices for personal computers and auxiliary power sources for automobiles capable of instantaneous supply of high current flow. As electronic equipment are reduced in size and weight, electric double-layer capacitors to be incorporated therein are also required to have a smaller size and a greater capacity. They are also required to have a greater capacity as the auxiliary power sources for automobiles.

In the manufacture of such electric double-layer capacitors having a high capacity, activated carbon and activated carbon fibers are often used as polarizable electrodes. Activated carbon was originally developed as adsorbents and catalysts. It is generally prepared by carbonizing coconut shells, coal and other raw materials, followed by activation to develop internal porosity. Although efforts have been made to increase the porosity and specific surface area of activated carbon, currently available activated carbon is still unsatisfactory for use as the polarizable electrodes of electric double-layer capacitors, with no significant change accomplished as to the capacity of electric double-layer capacitors.

Under such circumstances, various attempts have been made for improving the capacitance and other properties of electric double-layer capacitors. Many attempts are to modify the shape of current collectors and polarizable electrodes.

Less proposals have been made as to the carbon materials such as activated carbon and activated carbon fibers. Exemplary attempts are to provide electric double-layer capacitors with a high capacitance by using activated carbon and activated carbon fibers having a larger specific surface area. Ordinary activated carbon has a specific surface area of about 1,500 $m^2/g$ at the maximum. It is thus attempted to increase the specific surface area of activated carbon for providing a greater capacitance.

For example, Japanese Patent Application Kokai (JP-A) No. 153809/1988 discloses an electric double-layer capacitor comprising polarizable electrodes combined with an aqueous electrolyte solution. The polarizable electrodes are composed of activated carbon which is obtained by carbonizing heat-fusible phenolic resin powder followed by activation. The activated carbon used therein has a specific surface area of 2,000 to 3,500 $m^2/g$. Phenol formaldehyde resins are used in Examples.

JP-A 258410/1989 discloses electric double-layer capacitors using electrodes in the form of pellets which are prepared by carbonizing a raw material such as cresol resin, p-tert-butylphenol resin, and phenolic resin, mixing the resulting carbon material with powdery polyethylene and press shaping the mixture. In the preparation of carbon material, it is important to effect carbonization such that the atomic ratio of hydrogen to carbon is less than 0.35, preferably less than 0.1, and the lattice spacing of carbon (002) plane as measured by X-ray diffractometry is more than 3.37 Å, preferably 3.40 to 3.80 Å. More particularly, the raw material is heated in vacuum or an inert atmosphere, for example, at temperatures of 750 to 3,000°C.

JP-A 220713/1991 discloses a method for preparing an electric double-layer capacitor of the laminate type. Thermosetting resins such as phenolic resins are carbonized at temperatures of about 500 to 700°C into activated carbon, of which polarizable electrodes are formed.

Use of activated carbon fibers is disclosed in JP-A 26208/1986 (or JP-B 19615/1990). A mixture of ground activated carbon fibers and a fluorinated resin is molded under pressure into a disk or sheet which is ready for used as the polarizable electrode.

Some research works focus at the particularity of carbon material as well as specific surface area. JP-A 185008/1990 discloses an electric double-layer capacitor comprising polarizable electrodes in the form of a molded shape of optically anisotropic porous carbon microbeads resulting from activation processing of pitch-origin mesocarbon microbeads. The preferred microbeads have a specific surface area of 450 to 5,000 $m^2/g$ as measured by a BET method and an overall pore volume of 0.5 to 3.0 ml/g. This reference intends to increase the capacitance by increasing the specific surface area and the proportion of the internal surface of those pores of a sufficient size to form an electric double layer.

JP-A 172230/1984 describes a polarizable electrode in the form of a fabric, paper or felt-like member formed of activated carbon fibers (preferably derived from phenolic resins) wherein the internal surface area of pores having a diameter of at least 20 Å occupies at least 1% of the overall pore internal surface area. This reference intends to reduce the size and increase the capacitance of capacitors by increasing the proportion of the internal surface area of those pores of at least 20 Å in diameter. It is to be noted that a satisfactory capacitance did not develop with a specific surface area of 300 and 500 $m^2/g$ nor did with 1,500 $m^2/g$.

Hiratsuka, Sanada, Morimoto and Kurihara, "Evaluation of Activated Carbon Electrodes for Electric Double-Layer Capacitors Using an Organic Electrolyte Solution", Denki- Kagaku (Electro-Chemistry), Vol. 59, No. 7, 607 (1991), simply referred to as "Hiratsuka article" hereinafter, describes an electric double-layer capacitor wherein activated carbon obtained by activating carbon materials originating from coconut shell, phenolic resin and coke is used as the electrode. The relationship of capacitance to the specific surface area and overall pore volume of activated carbon is investigated. It is described that the capacitance C (F/g) per weight of activated carbon in the electrode has a linearity with the specific surface area S ($m^2/g$) of activated carbon, that the capacitance is not affected by the type of raw material of activated carbon and the porosity of activated carbon, and that micro-pores of less than 20 Å in diameter effectively form an electric double layer at the electrode surface. It is also described that C/S which is an index indicative of the proportion of an effective activated carbon surface to construct an electric double layer is not affected by the type of raw material of activated carbon and the porosity of activated carbon and has a value of 0.046 $F/m^2$ as determined from the slope of the plot. It is noted that this C/S value is calculated from the capacitance C as measured using propylene carbonate (PC) as the solvent.

With respect to the capacitance of electric double-layer capacitors using activated carbon and activated carbon fibers as the electrode, numerous studies have been made on the specific surface area of activated carbon and activated carbon fibers and the porosity contributing to formation of an electric double layer as mentioned above. In all these capacitors, the capacitance per single-electrode weight is low as compared with the theoretical estimate probably because of insufficient C/S. Exemplary capacitance values, as converted into a capacitance per activated carbon weight in the electrode, are about 180 to 190 F/g at maximum with coke-derived activated carbon and about 140 to 150 F/g at maximum with phenol-derived activated carbon (see Hiratsuka article).

It is thus desired to increase the capacitance of an electric double-layer capacitor by properly selecting a raw material and processing conditions used for the preparation of activated carbon or electrode material so as to provide an increased C/S value.

## SUMMARY OF THE INVENTION

Therefore, an object of the present invention is to provide an electric double-layer capacitor having an increased capacitance and improved charge-discharge performance.

The present invention is directed to an electric double-layer capacitor comprising an electrolyte, a solvent, and polarizable electrodes including activated carbon and a current collector. According to the invention, the capacitor has a capacitance C per single-electrode weight of at least 200 F/g and a C*/S value of at least 0.07 $F/m^2$. C*/S is a capacitance C* (F/g) per single-electrode weight as measured using water as the solvent divided by a specific surface area S ($m^2/g$) of the activated carbon as measured by a nitrogen adsorption BET method. Preferably, the capacitance C is at least 220 F/g, more preferably 300 to 500 F/g.

Preferably, the activated carbon has a specific surface area S of at least 800 $m^2/g$, more preferably at least 1,000 $m^2/g$, most preferably 1,100 to 4,500 $m^2/g$. In one preferred embodiment wherein the specific surface area S of activated carbon is 800 to 2,000 $m^2/g$, the C*/S value is at least 0.08 $F/m^2$, more preferably at least 0.09 $F/m^2$, most preferably 0.1 to 0.3 $F/m^2$. In another preferred embodiment wherein the specific surface area S of activated carbon is 2,000 to 4,500 $m^2/g$, the C*/S value is at least 0.08 $F/m^2$, more preferably at least 0.09 $F/m^2$, most preferably 0.1 to 0.15 $F/m^2$.

Typically, the activated carbon is obtained by the steps of preparing a furan resin using at least one of furfuryl alcohol and furfural as a monomer, optionally curing the furan resin, carbonizing the furan resin, and activating the carbonized material. Activation is preferably effected such that A/B is up to 0.5, especially up to 0.3 wherein the activated carbon has an X-ray diffraction spectrum wherein a peak corresponding to carbon (002) plane has an intensity A, and the carbonized material has an X-ray diffraction spectrum wherein a peak corresponding to carbon (002) has an intensity B. Preferably, the furan resin is cured before carbonization and activation. The furan resin as cured has a furan ring content of at least 30% by weight. Preferably, the carbonizing step is effected at a temperature of 480 to 1200°C and the activating step is effected at a temperature of 480 to 1200°C.

Preferably activation is by heating in the presence of an activating reagent which is selected from the group consisting of zinc chloride, potassium hydroxide, sodium hydroxide, and mixtures thereof. Alternatively, activation is by introducing steam.

## BRIEF DESCRIPTION OF THE DRAWINGS

The above and other objects, features and advantages of the invention will be better understood by reading the following description of preferred embodiments taken in conjunction with the accompanying drawings.

FIG. 1(a) is an exploded perspective view of an exemplary electric double-layer capacitor assembly according to the invention.

FIG. 1(b) is a side view thereof.

FIG. 2 is a schematic cross-sectional view of another exemplary electric double-layer capacitor according to the invention.

## DESCRIPTION OF THE PREFERRED EMBODIMENTS

The electric double-layer capacitor of the invention has a polarizable electrode which includes activated carbon and a current collector.

In one preferred embodiment of the invention, activated carbon is obtained by preparing a furan resin using furfuryl alcohol and/or furfural as a monomer, curing the furan resin, carbonizing the furan resin, and activating the carbonized material. This activated carbon is used as the polarizable electrode.

On X-ray diffractometry, the activated carbon has an X-ray diffraction spectrum wherein a peak corresponding to carbon (002) plane has an intensity A and the carbonized material has an X-ray diffraction spectrum wherein a peak corresponding to carbon (002) phase has an intensity B. The activation step is effected such that a peak intensity ratio A/B (the peak intensity A of activated carbon divided by the peak intensity B of carbonized material) is up to 0.5, up to 0.3. The lower limit of peak intensity ratio A/B is not critical although it is generally about 0.01.

Using the specific activated carbon as polarizable electrodes, an electric double-layer capacitor having a higher capacitance is obtained. More particularly, the capacitor has a capacitance C per single-electrode weight of at least 200 F/g, preferably at least 250 F/g, further preferably at least 300 F/g, and even reaching 500 F/g. Such high capacitance levels were never achieved by conventional means known so far.

In fact, conventional electric double-layer capacitors using coke- or phenol-derived activated carbon had a capacitance per single-electrode weight of about 140 to 190 F/g at maximum, as converted into a capacitance per weight of activated carbon in the electrode (see Hiratsuka article). The capacitance values achieved by the present invention are higher than those of the conventional capacitors. It is understood that the capacitance values achieved by the present invention increase about 7% from the above-mentioned values if they are converted into a capacitance per activated carbon weight by excluding the binder like the prior art capacitance values.

In the present invention, the capacitance values were determined by repeating charge/discharge cycles with a constant current, specifically a current flow of 1 mA over a voltage range between 0.1 V and 1.1 V in an aqueous solution system, and depicting a discharge curve from the fifth constant current discharge.

The electric double layer capacitance C of the polarizable electrode (single electrode) is represented by

$$C = (\varepsilon/d) \cdot Sa$$

wherein an electrolyte solution has a dielectric constant $\varepsilon$ and the electric double layer has a thickness d. Sa is an effective specific surface area to form the electric double-layer and represented by

$$Sa = \alpha S$$

wherein S is overall specific surface area and $0 \leqq \alpha \leqq 1$.

The electric double layer capacitance which is calculated from measurements (20 to 40 $\mu F/cm^2$) of a dropping mercury electrode or ideal polarizable electrode and a carbon specific surface area of 3,000 $m^2/g$ is estimated to be 1,200 F/g at maximum. The capacitance values accomplished by the present invention represent a significant step forward to the theory as compared with the conventional values.

Since it is believed that the electric double layer is formed at the surface of pores in activated carbon, we suppose that the higher the fraction of an effective surface of pores to form an electric double layer, the higher becomes the capacitance. Then $\alpha$ is a coefficient correlated to an index indicative of the fraction of an effective surface of activated carbon to form an electric double layer.

The electric double layer capacitor of the present invention can be increased in capacitance as mentioned above because the activated carbon used herein is prepared by carbonizing a furan resin as a raw material followed by activation. Since the resin has a furan ring containing oxygen or a hetero atom, carbonization and activation result in activated carbon in which oxygen atoms have been eliminated from the furan rings and rearrangement of carbon skeletons has taken place to form graphite micro-structures which present an effective surface to form an electric double layer. For this reason, activated carbon derived from a furan resin has an increased value of $\alpha$.

In contrast, activated carbon derived from phenolic resins has the following problem. Since benzene rings in the phenolic resins consist of carbon atoms and are free of hetero atoms such as oxygen, carbonization results in a material having a more developed graphite structure due to binding of benzene rings than in the case of furan resins. When such carbonized material is activated under conditions as mentioned above, there will not be established a sufficient state to provide an effective surface to form an electric double layer. In fact, Shiraishi, Hyomen (Surface), Vol. 30, No. 9, 748 (1992) shows in Figure 14 how the X-ray diffraction profile of activated carbon fibers prepared from phenolic resin as a raw material changes with a change of specific surface area during steam activation. The profiles show that the intensity of a peak corresponding to carbon (002) plane decreases with an increasing specific surface area, but this decrease of peak intensity by activation is not so outstanding as in the present invention and none of the profiles provide an A/B ratio of 0.3 or less (the preferred A/B range according to the present invention). Therefore, the activated carbon derived from phenolic resins and the activated carbon derived from furan resins as in the present invention show significantly different behaviors with respect to activation.

Optically anisotropic porous carbon microbeads resulting from activation processing of meso-carbon microbeads are believed to have a higher proportion of hydrogen relative to carbon in the carbonized material because they are derived from pitch as a raw material. Consequently, during activation under conditions as mentioned above, the presence of hydrogen inhibits formation of an effective surface to form an electric double layer. In fact, Shiraishi, Hyomen (Surface), Vol. 30, No. 9, 748 (1992) reports meso-carbon microbead samples whose specific surface area is changed by KOH activation. Figure 13 shows a change of X-ray diffraction profile with a change of specific surface area. The profiles show that the intensity of a peak corresponding to carbon (002) plane decreases with an increasing specific surface area and this decrease of peak intensity is equivalent to the same decrease in the present invention. However, an electric double-layer capacitor using this activated carbon as disclosed in JP-A 185008/1990 has a capacitance per single-electrode weight which is significantly lower than the same capacitance in the present invention. This is because the carbon material (meso-carbon microbeads) prior to activation has an explicitly distinct properties from the carbon material in the present invention. Despite analogous behavior during activation, activation in this case does not contribute to formation of an effective surface to form an electric double layer.

Hiratsuka article describes electric double-layer capacitors wherein activated carbon obtained by activating carbon materials originating from coconut shell, phenol resin and coke is used as the electrode. It is taught that capacitance is not affected by the type of activated carbon-forming raw material and pore parameters, but the capacitance per activated carbon weight in the electrode has a linearity with the specific surface area of activated carbon. As opposed to this, the electric double-layer capacitor of the present invention has a capacitance per single-electrode weight C (F/g) which is not a linear function of the specific surface area S ($m^2/g$) of activated carbon even though the capacitance is converted into a capacitance per activated carbon weight in the electrode.

It is understood from the foregoing discussion that the surface state of activated carbon derived from furan resin according to the present invention is different from the surface state of activated carbon derived from coconut shell, phenol resin and coke according to the above-cited article with respect to formation of an electric double layer. That is, the linear relationship that capacitance depends solely on a specific surface area does not exist in the electric double-layer capacitor of the present invention. Therefore, the present invention is characterized in that coefficient $\alpha$ in the above-mentioned equation $Sa = \alpha S$ is an important factor dictating the magnitude of capacitance while the capacitance cannot be determined simply from the proportional relationship to the specific surface area S.

The activated carbon used herein preferably has a specific surface area S of at least 800 $m^2/g$, more preferably at least 1,000 $m^2/g$, most preferably at least 1,100 $m^2/g$ as measured by a nitrogen adsorption BET method. With a specific surface area S ($m^2/g$) below the limit, the effective specific surface area Sa to form an electric double layer given by the above-mentioned equation would be small even if coefficient $\alpha$ is high, which is less desirable for the present invention. The upper limit of specific surface area is not critical although it is generally about 4,500 $m^2/g$.

On measurement of a specific surface area, the activated carbon has a mean particle size of about 10 to 200 $\mu$m. The mean particle size used herein is a value determined from an observation under a scanning electron microscope (SEM). The mean particle size of non-spherical particles is determined from the diameter of circles equivalent to the projection area.

The capacitor of the invention also has a capacitance per unit area $C^*/S$ value of at least 0.07 $F/m^2$, preferably at least 0.1 $F/m^2$. The capacitance per unit area $C^*/S$ is a capacitance $C^*$ (F/g) per single-electrode weight as measured using water (having a dielectric constant $\varepsilon$ of 78 at 25°C) as the solvent divided by the specific surface area S ($m^2/g$) of the activated carbon. The upper limit of $C^*/S$ is not critical although it is generally about 0.4 $F/m^2$. It is estimated that generally capacitors can have a C/S value of about 0.7 $F/m^2$ at max-

imum provided that the electric double layer has a thickness d of about 10 Å and the solvent is water.

With respect to the relationship between S and C*/S, it is desirable that C*/S is at least 0.08 F/m$^2$, more desirably at least 0.09 F/m$^2$, especially 0.11 to 0.3 F/m$^2$ when S is about 800 to 2,000 m$^2$/g and C*/S is at least 0.08 F/m$^2$, more desirably at least 0.09 F/m$^2$, especially 0.1 to 0.15 F/m$^2$ when S is more than about 2,000 m$^2$/g.

Hiratsuka article describes that the capacitors have a similar value of 4.6 $\mu$F/cm$^2$ (0.046 F/m$^2$) as determined from the gradient of the linear function described therein. Individual capacitor samples have values in the range of 0.056 to 0.078 F/m$^2$. With respect to the relationship between S and C/S, C/S is 0.07 to 0.078 F/m$^2$ when S is 1,000 to 1,500 m$^2$/g and C/S is 0.05 to 0.06 F/m$^2$ when S is 2,000 to 3,000 m$^2$/g. It is noted that the C/S value is calculated from the capacitance C as measured using propylene carbonate (having a dielectric constant $\varepsilon$ of 65 at 25°C) as the solvent. When converted to a value as measured using water as the solvent, the C/S value is less than 0.1 F/m$^2$.

The activated carbon obtained according to the preferred embodiment of the invention presents a greater C*/S than Hiratsuka article, provided that activated carbons have an approximately equal S. That is, C*/S of 0.07 F/m$^2$ or higher is available independent of the specific surface area (S).

When activation of carbon material is carried out so that the above-mentioned requirements are not met, that is, the peak intensity ratio A/B of the resulting activated carbon exceeds 0.5, no increase of the effective surface to form an electric double layer is expectable.

JP-A 153809/1988 describes a resin resulting from condensation reaction between phenol and furfural as an exemplary phenolic resin used as the raw material for activated carbon although only a resin resulting from condensation reaction between phenol and formaldehyde is used in Example. The patent reference does not refer to the activation step correlated to the intensity of a carbon peak in X-ray diffraction spectrum as in the present invention.

JP-A 258410/1989 describes a furan resin as an example of aromatic condensed polymers which are raw materials to be carbonized into electrode materials although the patent reference uses only a phenolic resin in Example. The patent reference describes that polymers are carbonized by heat treatment in vacuum or in an inert gas atmosphere, but not activation as in the present invention.

The advantages of the present invention are achieved by using a furan resin as a raw material and performing carbonization and activation under the above-mentioned conditions. The activated carbon used herein is obtained by curing, carbonizing and activating a furan resin.

The furan resin is prepared using furfuryl alcohol or furfural or a mixture of furfuryl alcohol and furfural as a monomer. The resin contains a structural unit of the formula:

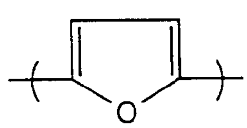

in the polymer chain. Furan rings are concatenated with or without a linking group interposed therebetween. Preferably the structural unit of the above formula occupies about 30 to 90% by weight of the entire polymer. Exemplary resins include furan resins resulting from co-condensation of solely furfuryl alcohol, co-condensation of furfuryl alcohol and furfural, co-condensation of furfural and phenol, co-condensation of furfural and a ketone, co-condensation of furfuryl alcohol and urea, co-condensation of furfuryl alcohol and methylol urea, and co-condensation of furfuryl alcohol and phenol, with the resins resulting from co-condensation of furfuryl alcohol and furfural being preferred. These furan resins have a number average molecular weight Mn of about 150 to 2,500 and an average degree of polymerization n of about 5 to 20.

The furan resins which can be used herein are commercially available while they may be synthesized by any well-known method. Some furan resins are commercially available in liquid state and the liquid may contain less than about 40% by weight of the monomer reactant.

Next the furan resins are cured, typically by adding a curing agent as such or a solution thereof. The curing agents used herein include various acids, for example, organic acids such as p-toluenesulfonic acid, xylenesulfonic acid, naphthalenesulfonic acid, p-toluenesulfonic acid chloride, and salicylic acid, inorganic acids such as halogenic acids (e.g., hydrochloric acid), sulfuric acid, phosphoric acid, boric acid, tetrafluorinated boric acid, and sulfamic acid (or amidosulfuric acid). Among these, p-toluenesulfonic acid, sulfuric acid, and phosphoric acid are preferred. The curing agent is preferably added to the furan resin so as to give a curing agent/furan resin weight ratio of from 1/1000 to 2/10 while the curing temperature ranges from about 0°C to about 100°C. When the furan resin is blended with the curing agent, curing or crosslinking takes place at the same time as mixing or within about 20 hours from mixing. For example, co-condensates between furfuryl

alcohol and furfural are commercially available in liquid state and can be cured or crosslinked into a solid by adding a curing agent thereto.

Alternatively, the furan resins can be cured solely by heat. To this end, heat treatment may be done at a temperature of about 100 to 250°C, preferably about 100 to 180°C for about 1 minute to about 40 hours.

If the raw material contains a monomer, the monomer is converted into a polymer during the curing step.

Curing causes crosslinking of the furan resin to progress into a complex bonded polymer or a dense, high strength material. It is generally believed that curing forms a crosslinked polymer having a three-dimensional network or reticulated structure.

The furan resin as cured preferably contains at least 30%, more preferably at least 50% by weight of furan ring. The upper limit is not critical although it is generally about 90% by weight. Use of such a furan resin facilitates to provide an effective surface to form an electric double layer, resulting in more advantages of the invention.

The cured furan resin is then carbonized, preferably by heating at a temperature of about 480 to 1,200°C, more preferably about 480 to 1,050°C, most preferably about 500 to 1,000°C.

By effecting carbonization at such temperatures, an adequate weight loss and shrinkage occur during carbonization. Pores are formed concomitant with a weight loss in a state advantageous for subsequent activation. No problems arise with respect to equivalent series resistance when an element is subsequently constructed. More particularly, when a furan resin is carbonized, the temperature at which the resin converts into carbon resides in the range between 400°C and 480°C, and the equivalent series resistance of elements formed therefrom largely varies with this carbonizing temperature. When carbonized at higher temperatures, shrinkage occurs as a result of reactions such as escape of carbon atoms as gases, typically carbon dioxide. Up to about 700°C, the influence of a weight loss by escape of such atoms and molecules is predominant. Above 700°C, shrinkage of carbonized material becomes predominant. Pores which have been increasing due to gas escape and other mechanisms up to about 700°C are now reduced due to shrinkage. The pores facilitate entry of oxygen and activating reagents during activation, contributing to an increase of specific surface area, especially an increase of an effective surface to form an electric double layer. Therefore, if the carbonizing temperature is too high, substantial shrinkage occurs to reduce pores to the extent that an increase of the effective surface is not expectable during activation. If the carbonizing temperature is too low, problems arise with respect to equivalent series resistance when an element is subsequently constructed.

The holding time at the above-mentioned carbonizing temperature is preferably about 0.1 to about 40 hours. The heating rate from room temperature to the carbonizing temperature may be about 1 to 1,000°C/hour, practically about 50 to 500°C/hour. Carbonization is preferably effected in an inert atmosphere, for example, nitrogen and rare gases such as argon.

The carbonized material is then activated such that the above-mentioned requirements may be met. The above-mentioned advantages are obtained by such activation.

Activation can be carried out such that the activating step may partially overlap the carbonizing step to serve for a part of carbonization or as a separate step after the carbonizing step is complete. In the latter case, activation may be effected continuously after carbonization simply by changing the atmosphere in the furnace or by feeding the carbonized material to an activating furnace.

In the overlapping embodiment wherein carbonizing and activating steps are carried out in a partially overlapping manner, the peak intensity ratio A/B mentioned above is determined by completing the carbonizing step under the same conditions and thereafter carrying out the activating step under the same conditions. In the overlapping embodiment, activation is commenced by introducing steam into the atmosphere used for carbonization or by introducing an activating reagent, followed by heat treatment.

In the separate embodiment wherein activation is carried out after carbonization, the carbonized material is heated in an atmosphere of nitrogen or inert gas containing steam, carbon dioxide, etc. Alternatively, the carbonized material is heated in an inert atmosphere in the presence of an activating reagent.

The activating reagents which can be used herein include alkali and alkaline earth metal hydroxides such as potassium hydroxide, sodium hydroxide and calcium hydroxide, alkali and alkaline earth metal carbonates such as potassium carbonate, sodium carbonate and calcium carbonate, alkali metal sulfides such as potassium sulfide, alkali metal thiocyanates such as sodium thiocyanate and potassium thiocyanate, and zinc chloride, alone or in admixture of two or more. They may be used as an aqueous solution, especially a saturated aqueous solution or in solid form as such.

In the preferred practice of the invention, after the carbonized material is obtained, activation is effected in the presence of an activating reagent. An alkali or alkaline earth metal hydroxide such as potassium hydroxide and sodium hydroxide is preferably used as the activating reagent, optionally in combination with an alkali or alkaline earth metal carbonates such as sodium carbonate and calcium carbonate.

Preferably the activating reagent is used in solid form in an amount which is 0.5 to 10 times the weight of

the carbon material. The amount is a combined amount where more than one activating reagent is used. The activating temperature is preferably 480 to 1,200°C, more preferably 500 to 1,000°C, further preferably 600 to 1,000°C, most preferably 650 to 950°C. The temperature is held for about 1/2 to about 40 hours. The heating rate to the activating temperature is about 10 to 1,000°C/hour, practically about 50 to 500°C/hour.

The activating atmosphere is an inert gas atmosphere such as nitrogen and argon.

Where an alkali or alkaline earth metal hydroxide such as potassium hydroxide and sodium hydroxide is used as the activating reagent alone or in combination with another activating reagent, the activating reagent(s) is in a molten state during activation. Activation assisted by the activating reagent in a molten salt state is preferred. The degree of activation may be controlled by adjusting the amount of activating reagent, activating time, and activating temperature.

Also preferably the carbon material is activated with steam. Especially, activation with steam is followed by activation assisted by zinc chloride as an activating reagent.

The activated product is washed with water, hydrochloric acid or the like, washed again with water, and dried. Washing removes impurities other than carbon, for example, unreacted activating reagents and by-products resulting from extinction where activating reagents are used.

In this way, there is obtained activated carbon in powder form.

On use, activated carbon may be pulverized into a powder of a suitable particle size. It is then mixed with an electrolyte solution to form a paste or mixed with a binder to form a pellet or sheet. Preferably activated carbon is formed into a pellet or sheet using a binder because an increased capacitance per unit volume, high mechanical strength and ease of handling are available. For use in pellet or sheet form, activated carbon is pulverized into a powder having a mean particle size of 1 to 100 μm, the activated carbon powder is mixed with 1 to 30% by weight of a binder, and the mixture is molded into a pellet or sheet by a well-known method, for example, pressing, extrusion and rolling.

The binders which can be used herein include various natural and synthetic polymers, for example, methyl cellulose, ethyl cellulose, carboxymethyl cellulose and sodium or ammonium salts thereof, carboxyethyl cellulose and sodium or ammonium salts thereof, hydroxymethyl cellulose and sodium or ammonium salts thereof, hydroxyethyl cellulose and sodium or ammonium salts thereof, alginic acid and sodium salt thereof, starch, gum arabic, gelatin, polyacrylic acid and salts thereof, polymethacrylic acid and salts thereof, polyvinyl alcohol, polyethylene oxide, natural rubber, silicone rubber, butyl rubber, butadiene rubber, styrene-butadiene rubber, acrylonitrile-butadiene rubber, chloroprene rubber, polyvinyl acetate, polyvinyl chloride, polybutene, polyvinyl butyral, polyvinylidene fluoride, polytrifluorochloroethylene, copolymers of trifluorochloroethylene with ethylene, polytetrafluoroethylene, and copolymers of tetrafluoroethylene with ethylene, hexafluoropropylene, or perfluoroalkyl vinyl ethers.

These polymers may be cured with electron beams as such if possible or after introduction of an electron beam-sensitive group or after mixing with an electron beam-curable monomer.

The electric double-layer capacitor of the present invention uses as a polarizable electrode the activated carbon derived from furan resin as mentioned above. Briefly stated, the capacitor includes an electrolyte, a solvent and at least one polarizable electrode formed from the activated carbon and a current collector.

Referring to FIG. 1, there is illustrated one exemplary arrangement of the electric double-layer capacitor according to the present invention. FIG. 1(a) is an exploded perspective view and FIG. 1(b) is a side view of a capacitor assembly. The electric double-layer capacitor assembly is shown as comprising a pair of opposed polarizable electrodes each including an activated carbon layer or pellet 1 and a current collector 2 and a separator 3 interposed between the polarizable electrodes. More specifically, the separator 3 intervenes between the activated carbon pellets 1. The activated carbon pellets 1 and separator 3 are impregnated with an electrolyte solution of an electrolyte in a solvent. A pair of perforated insulating gaskets 4 are disposed around the polarizable electrodes and separator 3 and a pair of opposed solid insulating gaskets 4 are disposed outside the polarizable electrodes (current collectors 2). As shown in FIG. 1(a), a pair of sheath plates 5 of a suitable resin (e.g., acrylic resin) with the insulating gaskets 4 interposed therebetween are fastened together by bolts and nuts 6 to construct an electric double-layer capacitor assembly as shown in FIG. 1(b).

Since the electric double-layer capacitor of the invention has an increased capacitance, the arrangement shown in FIG. 1 is sufficient to allow the capacitor to exert its full function.

The electric double-layer capacitor is not limited to the assembly shown in FIG. 1. An alternative arrangement is shown in FIG. 2. The parts having the same function as in FIG. 1 are designated by like numerals. The arrangement of FIG. 2 is basically the same as that of FIG. 1. A separator 3 is sandwiched between a pair of activated carbon pellets 1. The sandwich is received in a pair of annular gaskets 4. A current collector 2 is on each outer surface of the sandwich. The separator 3 at the periphery is interposed between the gaskets 4 and the current collectors at the periphery are secured to the sides of the gaskets 4. This arrangement can be a base unit. A plurality of base units of this arrangement may be superposed one on top of another to form

a lamination. For this purpose, the current collectors 2 are preferably formed of conductive rubber.

In the electric double-layer capacitor of the invention, the activated carbon is impregnated with an electrolyte solution. In addition to its ordinary meaning, the term "impregnation" encompasses the concept of mixing activated carbon powder with an electrolyte solution to form a paste as mentioned above.

The electrolyte solution used herein may be either an aqueous solution or an organic solvent solution. Note that water used as the solvent of the aqueous electrolyte solution has a dielectric constant $\varepsilon$ of 78 at 25°C.

Examples of the electrolyte used in the aqueous system include acids such as sulfuric acid and tetrafluoroboric acid; bases such as potassium hydroxide, sodium hydroxide, and ammonium hydroxide; chlorides such as potassium chloride, sodium chloride, calcium chloride, and ammonium chloride; and carbonates such as potassium carbonate, sodium carbonate, and ammonium carbonate. Among these, sulfuric acid, tetrafluoroboric acid, potassium hydroxide, and sodium hydroxide are especially preferred since they have high electric conductivity.

The electrolyte solution of the aqueous system may have a suitable concentration of 10 to 90% by weight. Problems like precipitation of the solute at low temperature arise at concentrations in excess of 90% by weight. Concentrations of less than 10% by weight are undesirably low in conductivity and increase the internal resistance of the capacitor.

Examples of the electrolyte used in the organic solvent system include quaternary onium salts such as $BF_4$ and $ClO_4$ salts of tetraethylammonium and tetrabutylammonium; and metal salts such as $LiBF_4$, $LiClO_4$, and $NaPF_6$. Useful electrolytes are described in JP-A 258410/1989. The organic solvent may be selected from well-known ones. Useful solvents are electrochemically stable non-aqueous solvents, for example, propylene carbonate, ethylene carbonate, $\gamma$-butyrolactone, acetonitrile, dimethylformamide, 1,2-dimethoxyethane, sulforan, and nitromethane, alone or in admixture. Those organic solvents having a dielectric constant $\varepsilon$ of at least 60 at 25°C are preferred. The electrolyte solution of the organic solvent system preferably has an electrolyte concentration of 0.1 to 3 mol/liter.

The separator used herein may be a porous separator allowing for passage of ions therethrough. Preferred are porous separators of polypropylene fiber non-woven fabric and glass fiber mixed non-woven fabric. Glass mat filters are also useful.

The current collector which is combined with activated carbon to construct the polarizable electrode may be platinum or conductive rubber such as conductive butyl rubber. It may also be formed by plasma spray coating of metals such as aluminum and nickel. Alternatively, a metal mesh or net may be attached to one surface of an activated carbon layer.

Insulating materials such as polypropylene, silicone rubber and butyl rubber may be used as the insulating gaskets.

If desired, a capacitor assembly of the structure shown in FIG. 1 or 2 or a lamination of units of the structure shown in FIG. 2 may be accommodated in a casing of stainless steel which is designed to maintain the electrodes insulated.

## EXAMPLE

Examples of the present invention are given below by way of illustration and not by way of limitation. All parts are by weight.

### Example 1

To 100 parts of a co-condensate of furfuryl alcohol with furfural (trade name Hitafuran VF303, Hitachi Chemicals K.K., Mn = ~700, n = ~7, containing about 40% by weight of starting monomers) was added 1 part of p-toluenesulfonic acid. They were mixed and heated at 80°C for one hour for curing. The liquid resin turned into a solid. The cured resin had a furan ring content of about 80% by weight.

The cured resin was placed in a stainless steel crucible and introduced into a tubular electric furnace where it was carbonized in a nitrogen atmosphere by heating. The resin was heated at a rate of 300°C/hour and held at the carbonizing temperature shown in Table 1 for one hour.

To the carbonized material was added potassium hydroxide (KOH) in an amount which was three times the weight of the carbonized material. The mixture was introduced in a tubular electric furnace having a nitrogen atmosphere where it was activated by heating. The carbonized material was heated at a rate of 300°C/hour and held at the activating temperature shown in Table 1 for one hour.

The thus obtained material was washed with water, with 3N hydrochloric acid, and again with water, and then dried.

The resulting activated carbon was measured for specific surface area S ($m^2$/g) by the nitrogen adsorption

BET method. On measurement of specific surface area, the activated carbon had a mean particle size of 50 to 200 μm.

The activated carbon was pulverized to a mean particle size of 10 μm. The activated carbon powder was combined with 7% by weight of polytetrafluoroethylene (PTFE) and wet milled into a sheet. The sheet (electrode material) was punched into a disk having a diameter of 12 mm and a thickness of 1.5 mm.

An electric double-layer capacitor of the arrangement shown in FIG. 1 was assembled using a pair of disks prepared as above, a glass mat filter (disk having a diameter of 14 mm and a thickness of 50 μm) as the separator, platinum plates (in the form of a disk having a diameter of 18 mm and a thickness of 50 μm, with a lead of 0.5 mm in diameter connected thereto) as the current collector, silicone rubber as the insulating gasket, and acrylic resin plates as the sheathing plate. Upon assembly, the separator and activated carbon were impregnated with an aqueous solution of 30 wt% sulfuric acid.

In this way, capacitor samples were fabricated as shown in Table 1.

For comparison purposes, sample A was fabricated by the same procedure as above except that the activated carbon used in the polarizable electrodes was replaced by commercially available activated carbon fibers derived from a phenolic resin (specific surface area 2,100 $m^2/g$ by BET); and sample B was fabricated by the same procedure as above except that the activated carbon used in the polarizable electrodes was replaced by commercially available activated carbon powder (specific surface area 1,260 $m^2/g$ by BET).

The samples were measured for capacitance. The capacitance was determined by repeating charge/discharge cycles with a constant current of 1 mA over a voltage range between 0.1 V and 1.1 V, depicting a discharge curve from the fifth constant current discharge, and calculating a capacitance (F/g) per single-electrode weight. In this Example, $C = C^*$ because the electrolyte solution used was an aqueous system.

The carbonized material and activated carbon were examined by X-ray diffractometry. From the X-ray diffraction spectra, the intensity of a peak corresponding to carbon (002) plane was determined. A peak intensity ratio A/B, that is, peak intensity A of activated carbon divided by peak intensity B of carbonized material was determined.

The results are shown in Table 1.

Table 1

| Sample | Activated carbon | | | | | Capacitor | |
|---|---|---|---|---|---|---|---|
| No. | Raw material | Carbonizing temp. (°C) | Activating temp. (°C) | A/B | S ($m^2/g$) | C (F/g) | C*/S |
| 1 | furan resin | 600 | 700 | 0.06 | 2961 | 480 | 0.16 |
| 2 | furan resin | 700 | 800 | 0.15 | 3980 | 440 | 0.11 |
| 3 | furan resin | 800 | 800 | 0.20 | 1630 | 420 | 0.26 |
| 4 | furan resin | 600 | 800 | 0.05 | 3260 | 410 | 0.13 |
| 5 | furan resin | 900 | 800 | 0.23 | 1410 | 390 | 0.28 |
| 6 | furan resin | 1000 | 800 | 0.27 | 1210 | 340 | 0.28 |
| 7 | furan resin | 500 | 800 | 0.17 | 2370 | 340 | 0.14 |
| 8 | furan resin | 600 | 900 | 0.10 | 3290 | 330 | 0.10 |
| 9 | furan resin | 600 | 600 | 0.26 | 1990 | 240 | 0.12 |
| 10 | furan resin | 600 | 1000 | 0.17 | 1840 | 230 | 0.13 |
| 11* | furan resin | 450 | 450 | 0.99 | 800 | 0 | 0 |
| 12* | furan resin | 450 | 1250 | 0.63 | 560 | 0 | 0 |
| 13* | furan resin | 1250 | 450 | 0.95 | 500 | 20 | 0.04 |
| 14* | furan resin | 1250 | 1250 | 0.95 | 30 | 0 | 0 |
| A* | phenol resin-derived activated carbon fibers | | | | 2100 | 153 | 0.07 |
| B* | commercial activated carbon powder | | | | 1260 | 90 | 0.07 |

* outside the scope of the invention

(C = C* for all the samples)

The benefits of the invention are evident from the data of Table 1. It is preferred to carry out activation so as to provide a peak intensity ratio A/B of less than 0.3. From the fact that simply increasing the specific surface

area does not always lead to an increased capacitance, the presence of an effective surface to form an electric double layer is reasonably estimated. When comparative samples A and B are compared with inventive samples having approximately the same specific surface area, the inventive samples have a significantly higher C*/S value. The inventive samples had an equivalent series resistance of an acceptable level.

Equivalent results were obtained when the activating reagent was replaced by sodium hydroxide (NaOH). Equivalent results were obtained when activation was effected by introducing steam in a nitrogen atmosphere instead of the activating reagent, and when steam activation was followed by activation using zinc chloride as an activating reagent.

There has been described an electric double-layer capacitor having an increased capacitance.

Japanese Patent Application No. 65746/1994 is incorporated herein by reference.

Although some preferred embodiments have been described, many modifications and variations may be made thereto in the light of the above teachings. It is therefore to be understood that within the scope of the appended claims, the invention may be practiced otherwise than as specifically described.

## Claims

1. An electric double-layer capacitor comprising an electrolyte, a solvent, and a polarizable electrode including activated carbon and a current collector,
   said capacitor having a capacitance C per single-electrode weight of at least 200 F/g and a C*/S value of at least 0.07 F/$m^2$ wherein C*/S is a capacitance C* (F/g) per single-electrode unit weight as measured using water as the solvent divided by a specific surface area S ($m^2$/g) of said activated carbon as measured by a nitrogen adsorption BET method.

2. The capacitor of claim 1 which has a capacitance C of at least 220 F/g.

3. The capacitor of claim 2 wherein the capacitance C is 300 to 500 F/g.

4. The capacitor of any one of claims 1 to 3 wherein said activated carbon has a specific surface area S of at least 800 $m^2$/g.

5. The capacitor of claim 4 wherein the specific surface area S is at least 1,000 $m^2$/g.

6. The capacitor of claims 5 wherein the specific surface area S is 1,100 to 4,500 $m^2$/g.

7. The capacitor of any one of claims 1 to 6 wherein the activated carbon specific surface area S is 800 to 2,000 $m^2$/g and the C*/S value is at least 0.08 F/$m^2$.

8. The capacitor of claim 7 wherein said C*/S value is at least 0.09 F/$m^2$.

9. The capacitor of claim 8 wherein said C*/S value is 0.1 to 0.3 F/$m^2$.

10. The capacitor of any one of claims 1 to 9 wherein the activated carbon specific surface area S is 2,000 to 4,500 $m^2$/g and the C*/S value is at least 0.08 F/$m^2$.

11. The capacitor of claim 10 wherein said C*/S value is at least 0.09 F/$m^2$.

12. The capacitor of claim 11 wherein said C*/S value is 0.1 to 0.15 F/$m^2$.

13. The capacitor of any one of claims 1 to 12 wherein said activated carbon is obtained by the steps of preparing a furan resin using at least one of furfuryl alcohol and furfural as a monomer, carbonizing the furan resin, and activating the carbonized material.

14. The capacitor of claim 13 wherein
    said activated carbon has an X-ray diffraction spectrum wherein a peak corresponding to carbon (002) plane has an intensity A,
    said carbonized material has an X-ray diffraction spectrum wherein a peak corresponding to carbon (002) has an intensity B, and

A/B is up to 0.5.

15. The capacitor of claim 14 wherein A/B is up to 0.3.

16. The capacitor of any one of claims 13 to 15 wherein the carbonizing step is at a temperature of 480 to 1200°C.

17. The capacitor of any one of claims 13 to 16 wherein the activating step is at a temperature of 480 to 1200°C.

18. The capacitor of any one of claims 13 to 17 wherein the furan resin is cured before carbonization and activation.

19. The capacitor of claim 18 wherein the furan resin as cured has a furan ring content of at least 30% by weight.

20. The capacitor of any one of claims 13 to 19 wherein the activating step includes heating in the presence of an activating reagent.

21. The capacitor of claim 20 wherein the activating reagent is selected from the group consisting of zinc chloride, potassium hydroxide, sodium hydroxide, and mixtures thereof.

22. The capacitor of any one of claims 13 to 21 wherein the activating step includes introducing steam.

FIG. 1

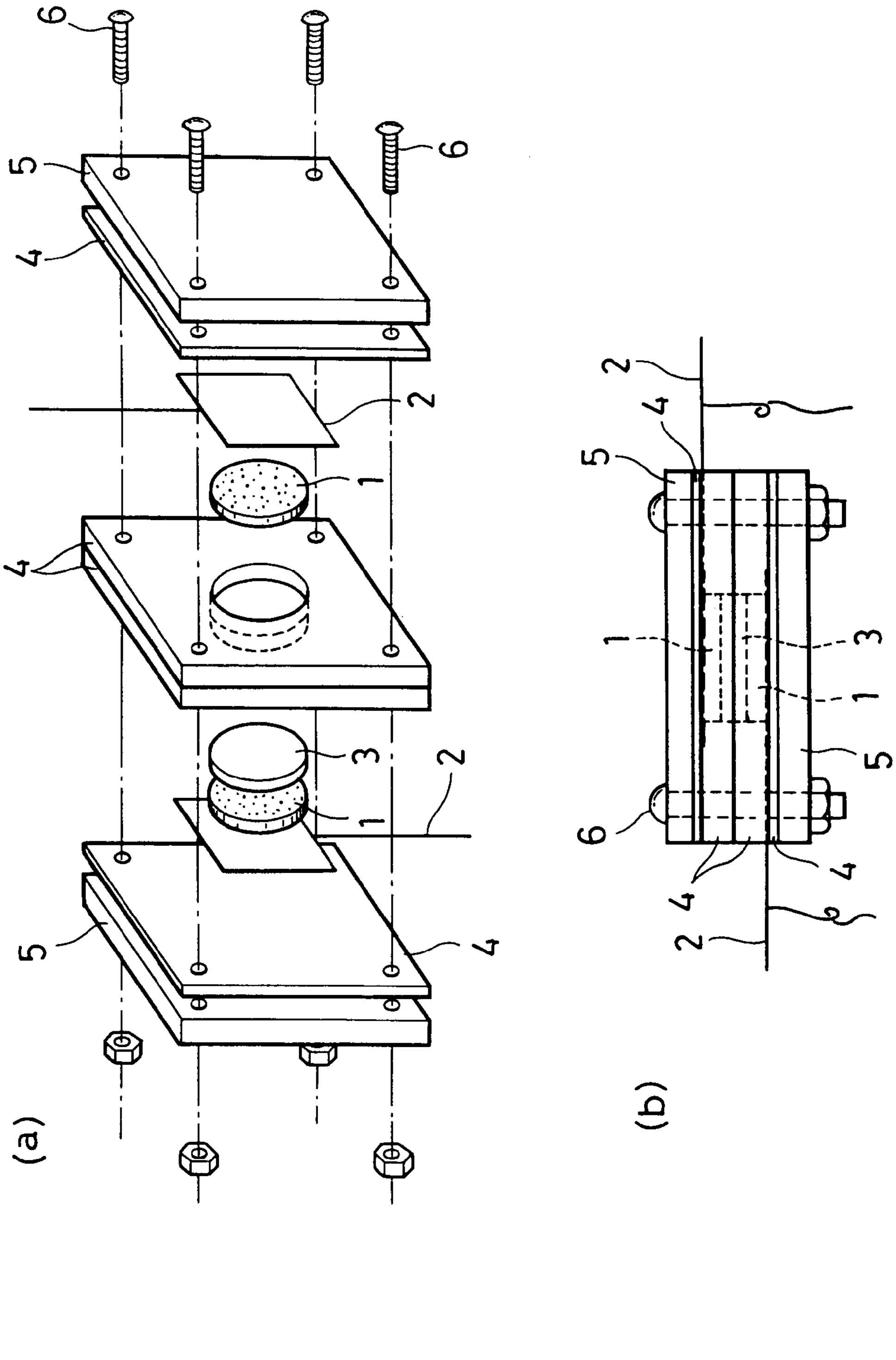

FIG. 2

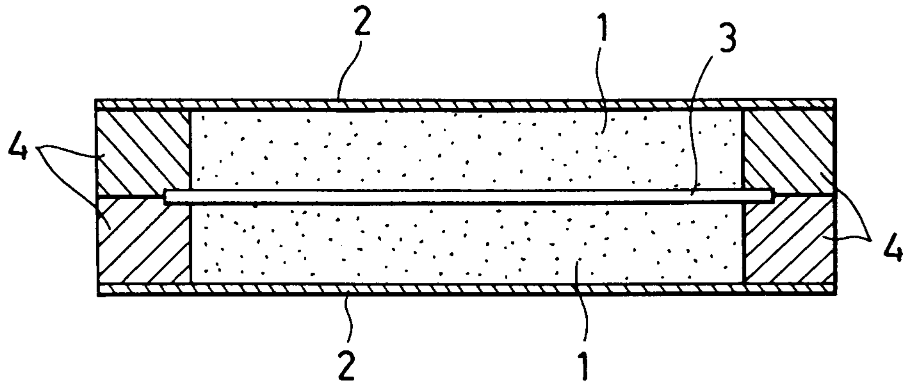

European Patent Office

# EUROPEAN SEARCH REPORT

Application Number
EP 95 30 1527

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br><br>A | EP-A-0 514 545 (TAKEDA CHEMICAL INDUSTRIES LTD.)<br>* examples 1,2 *<br>* page 2, line 38 - line 43 *<br>--- | 1-12<br><br><br>16 | H01G9/155 |
| A | PATENT ABSTRACTS OF JAPAN<br>vol. 17 no. 292 (E-1376) ,4 June 1993<br>& JP-A-05 021274 (MATSUSHITA ELECTRIC IND CO LTD)<br>* abstract *<br>--- | 1,13,16,<br>17,20,22 | |
| A | EP-A-0 176 692 (SIEMENS AKTIENGESELLSCHAFT)<br>* page 2, line 20 - page 3, line 6 *<br>* page 3, line 21 - line 23 *<br>* page 4, line 18 - page 5, line 35 *<br>* page 9, line 16 - line 24 *<br>----- | 1,16-18 | |

TECHNICAL FIELDS SEARCHED (Int.Cl.6)

H01G

The present search report has been drawn up for all claims

| Place of search | Date of completion of the search | Examiner |
|---|---|---|
| THE HAGUE | 14 July 1995 | Goossens, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)